(19) Europäisches Patentamt
European Patent Office
Office européen des brevets

(11) **EP 3 316 059 A1**

(12) **EUROPEAN PATENT APPLICATION**

(43) Date of publication:
**02.05.2018 Bulletin 2018/18**

(51) Int Cl.:
***G05B 19/416*** (2006.01)

(21) Application number: **17190189.5**

(22) Date of filing: **08.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.10.2016 JP 2016195891**

(71) Applicant: **Omron Corporation**
**Kyoto-shi, Kyoto 600-8530 (JP)**

(72) Inventor: **KOGA, Tatsuya**
**Kyoto-shi, Kyoto 600-8530 (JP)**

(74) Representative: **Horn Kleimann Waitzhofer**
**Patentanwälte PartG mbB**
**Ganghoferstrasse 29a**
**80339 München (DE)**

(54) **LOCUS GENERATION APPARATUS, CONTROL METHOD FOR LOCUS GENERATION APPARATUS, CONTROL PROGRAM, AND STORAGE MEDIUM**

(57)    A torque peak is suppressed without significantly modifying a structure of an apparatus. Included are an input reception unit (100) for receiving a designated driving time, and a locus unit (200) that generates a torque locus with an maximum value at its minimum by adjusting a switching timing and a maximum value under the conditions that the torque locus is a rectangular wave, the absolute values of the maximum value and the minimum value of torque are equal, and switching between the maximum value and the minimum value of the torque occurs once.

**FIG. 1**

**Description**

CROSS-REFERENCES TO RELATED APPLICATIONS

This application claims priority to Japanese Patent Application No. 2016-195891 filed October 3, 2016, the entire contents of which are incorporated herein by reference.

FIELD

The present invention relates to a locus generation apparatus and the like that generate an input locus for input to a control apparatus.

BACKGROUND

In controlling the operation of a machine, equipment, or the like, in the case of carrying a weighted load or in the case where shortening of driving time is desired, control such as increasing the driving velocity of the driving portion and increasing the torque value provided to the driving portion is needed. However, increasing the provided torque value is meaningless if the capacity of the corresponding driving portion (motor) does not correspond thereto. Accordingly, in the case of carrying a weighted load or in the case where the torque is overloaded upon shortening the driving time, it is necessary to increase the capacity of the motor.

However, increasing the capacity of the motor has adverse effects such as increasing the size of the power source equipment and increasing power consumption. Also, in the industry of manufacturing a control apparatus for performing motor control using an inverter, there is a lot of demand to reduce the capacity of the motor to the greatest extent possible.

In view of this, conventionally, in order to resolve insufficient torque, people have intuitively selected curves to serve as input loci. Specifically, people have used the maximum acceleration and maximum velocity as references to intuitively select a curve according to which the torque may be reduced from among multiple cam curves. However, since the needed torque increases or decreases depending on the apparatus, it has not necessarily been possible to select the optimal curve. Accordingly, there is a limit to the method of dealing with the problem by selecting a curve to serve as an input locus, and in this case, it has been necessary to increase the capacity of the motor.

Note that Patent Document 1 discloses a component mounting apparatus that improves insufficient driving torque of a conveying belt. Specifically, in Patent Document 1, a fixed-side conveying motor that drives a conveying belt provided on a fixed rail and a movable-side conveying motor that drives a conveying belt provided on a movable rail are disposed so as to not interfere with each other, and thereby insufficient driving torque is improved.

Also, Patent Document 2 discloses a driving method for a pulse motor that increases the velocity of a pulse motor to a target velocity in a short amount of time while preventing step-loss. Specifically, in Patent Document 2, the velocity of the pulse motor is increased to a target velocity in a short amount of time by changing the velocity pattern of the pulse motor to a first velocity curve with a gradually-increasing curve inclination, a second velocity line that increases monotonically, and a third velocity curve with a gradually-decreasing curve inclination, in the stated order, and making the set time for the first velocity curve shorter than the set time for the third velocity curve.

JP 2016-58561A (published April 21, 2016) and JP 2009-81922A (published April 16, 2009) are examples of background art.

In JP 2016-58561A, in order to compensate for insufficient torque, the structure of the apparatus itself is modified, resulting in a significant modification. Also, in JP 2009-81922A, a velocity pattern for a pulse motor is devised, but it is not necessarily optimal.

Accordingly, the methods disclosed in JP 2016-58561A and JP 2009-81922A cannot be used to carry a weighted load or shorten the driving time without increasing the capacity of the motor.

The present invention was made in view of the foregoing problems, and it is an object thereof to realize a locus generation apparatus and the like that generate an input locus according to which a torque peak is suppressed and a conveying time can be shortened without significantly modifying the structure of the apparatus.

SUMMARY

In order to solve the above-described problems, a locus generation apparatus according to the present invention is a locus generation apparatus for generating an input locus to be used in control of an apparatus, including: an input reception unit configured to receive a designated driving time, which is an amount of time until a control target moves to a predetermined position from an initial position; a torque locus generation unit configured to generate a torque locus corresponding to the designated driving time, the torque locus having a maximum value that is at its minimum, by adjusting a switching timing and the maximum value, under the conditions that: the torque locus is a rectangular wave, absolute values of the maximum value and a minimum value of torque are equal, and switching between the maximum value and the minimum value of the torque occurs once; and an input locus unit configured to generate the input locus from the torque locus.

According to the above-described configuration, the torque locus corresponding to the designated driving time can be generated such that it is a rectangular wave, the absolute values of the maximum value and minimum value of the torque are equal, and switching between the maximum value and the minimum value of the torque occurs once. Accordingly, the peak value of the torque can be set to its minimum. Also, by adjusting the switching timing and the maximum value of the torque, the control target can be appropriately moved from an initial position and initial velocity to a predetermined position and predetermined velocity in a designated driving time.

Accordingly, it is possible to generate an input locus for moving a control target from an initial position and initial velocity to a predetermined position and predetermined velocity at a designated driving time, the input locus having a peak value for needed torque that is at its minimum.

Also, since the peak value of the needed torque can be suppressed, the conveyance weight can be raised compared to the conventional technique if the driving apparatus is the same as the driving apparatus in which the peak values in the conventional configuration have been dealt with. Similarly, if a driving apparatus that is the same as the conventional driving apparatus is used, it is possible to shorten the conveying time.

With the locus generation apparatus according to the present invention, based on the torque locus, the input locus generation unit generates at least one of a velocity locus indicating a relationship between time and velocity of the control target and a position locus indicating a relationship between time and position of the control target as the input locus.

According to the above-described configuration, the velocity locus or the position locus generated based on the generated torque locus can be used as the input locus. Accordingly, even if a model error occurs, the control target can be more appropriately moved to a predetermined position in a predetermined driving time.

With the locus generation apparatus according to the present invention, the input locus generation unit uses a high-order characteristic model as a characteristic model of the control target to generate at least one of the velocity locus and the position locus as the input locus.

According to the above-described configuration, a high-order characteristic model can be used to generate at least one of a velocity locus and a position locus as the input locus.

With the locus generation apparatus according to the present invention, as the input locus, the input locus generation unit generates a locus resulting from performing correction using a moving average on at least one of the velocity locus and the position locus generated based on the torque locus.

According to the above-described configuration, the input locus corrected using the moving average is generated. Accordingly, since the input locus can be smoothed, it is possible to suppress a case in the torque peaks due to noise caused by a model error or the like.

With the locus generation apparatus according to the present invention, the input locus generation unit generates the input locus by deriving at least one of a calculated velocity locus and a calculated position locus corresponding to a calculation driving time obtained by subtracting a shortened time from the designated driving time in at least one of the velocity locus and the position locus, and calculating a moving average of a locus obtained by adding a locus for the shortened time to at least one of the calculated velocity locus and the calculated position locus.

At the drive start time, friction is large due to the influence of static friction and the torque peaks in the driving start portion due to the friction. According to the above-described configuration, the input locus is generated using the moving average, and thereby the peak of the torque in the driving start portion can be smoothed. Accordingly, it is possible to suppress a case in which the torque peaks.

Also, by calculating the moving average by adding the shortened time, after the moving average is calculated, it is possible to achieve a locus that corresponds to the designated driving time.

With the locus generation apparatus according to the present invention, the input locus generation unit derives at least one of a calculated velocity locus and a calculated position locus corresponding to a calculation driving time obtained by subtracting a shortened time from the designated driving time in at least one of the velocity locus and the position locus, obtains a moving average based on a moving average calculation locus obtained by adding a locus for the shortened time to the front and rear of at least one of the calculated velocity locus and the calculated position locus, and subtracts the shortened time from the result of obtaining the moving average to obtain a locus, which is generated as the input locus.

According to the above-described configuration, since the input locus can be smoothed, it is possible to suppress a case in which the torque peaks.

Also, by calculating the moving average by adding the locus for the shortened time to the front and rear of at least one of the calculated velocity locus and the calculated position locus, it is possible to smooth the front and rear of the input locus. Accordingly, it is possible to suppress a model error (e.g., an error caused by friction or a tracking delay) at the driving start time and the driving stop time.

With the locus generation apparatus according to the present invention, the torque locus generation unit calculates the switching timing and the torque values according to which the maximum value of the torque reaches its minimum through a numerical value analysis method, and generates the torque locus.

In general, it is difficult to calculate the switching timing and the torque value according to which the maximum value of the torque reaches its minimum. According to the above-described configuration, it is possible to realize calculation of the switching timing and the torque value using a numerical value analysis method. Note that the numerical value analysis method may be performed using a heuristic search algorithm, or may be performed using a convergent calculation such as Newton's law.

In order to solve the above-described problems, a control method for a locus generation apparatus according to the present invention is a control method for a locus generation apparatus for generating an input locus to be used in control of an apparatus, including: an input reception step of receiving a designated driving time, which is an amount of time until a control target moves from an initial position to a predetermined position; a torque locus generation step of generating a torque locus corresponding to the designated driving time, the torque locus having a maximum value that is at its minimum, by adjusting a switching timing and the maximum value, under the conditions that: the torque locus is a rectangular wave, absolute values of the maximum value and a minimum value of torque are equal, and switching between the maximum value and the minimum value of the torque occurs once; and an input locus generation step of generating the input locus from the torque locus.

Accordingly, it is possible to achieve effects similar to the above-described effects.

The locus generation apparatus according to the aspects of the present invention may be realized by a computer, and in this case, a control program for a locus generation apparatus that causes a computer to realize the locus generation apparatus by causing the computer to operate as the units (software elements) included in the locus generation apparatus, and a computer-readable storage medium storing the control program fall within the scope of the present invention.

According to the present invention, an effect of suppressing a torque peak and being able to shorten the conveying time without significantly modifying the structure of the apparatus is exhibited.

BRIEF DESCRIPTION OF THE DRAWINGS

FIG. 1 is a block diagram showing a configuration of relevant portions of a control apparatus according to the present embodiment.
FIG. 2 is a diagram showing an overview of a control system according to the above-described embodiment.
FIG. 3 is a diagram showing details of the control system.
FIG. 4 is a schematic view showing a hardware configuration of a support apparatus according to the present embodiment.
FIG. 5 is a flowchart diagram showing a flow of processing for generating a torque locus in the control apparatus.
FIG. 6 is a diagram showing an example of a torque locus generated by the torque locus generation unit in the above-described control apparatus.
FIG. 7 is a diagram showing a torque locus and a relationship between an actual position of a control target and time.
FIG. 8 is a flowchart diagram showing a flow of processing for generating a velocity locus and a position locus in the control apparatus.
FIG. 9 is a diagram showing a torque locus in the case of performing position control using the position locus, and a relationship between the position of the control target and the time.
FIGS. 10A and 10B are diagrams showing actual friction and modeled friction.
FIG. 11 is a flowchart diagram showing a flow of processing for generating an input locus using a moving average in the control apparatus.
FIGS. 12A, 12B, and 12C are diagrams for describing a method for deriving an input locus using a moving average.
FIG. 13 is a diagram showing an example of a velocity average derived using a moving average.
FIG. 14 is a diagram showing an example of a position locus derived using a moving average and a corresponding torque locus.
FIGS. 15A and 15B are diagrams obtained by comparing a case of using the input locus according to the present embodiment and a case of using a conventional input locus.
FIGS. 16A and 16B are diagrams obtained by comparing a case of using the input locus according to the present embodiment and a case of using a conventional input locus.
FIG. 17 is a diagram showing an example of a functional block according to the present embodiment.

DETAILED DESCRIPTION

Embodiment 1

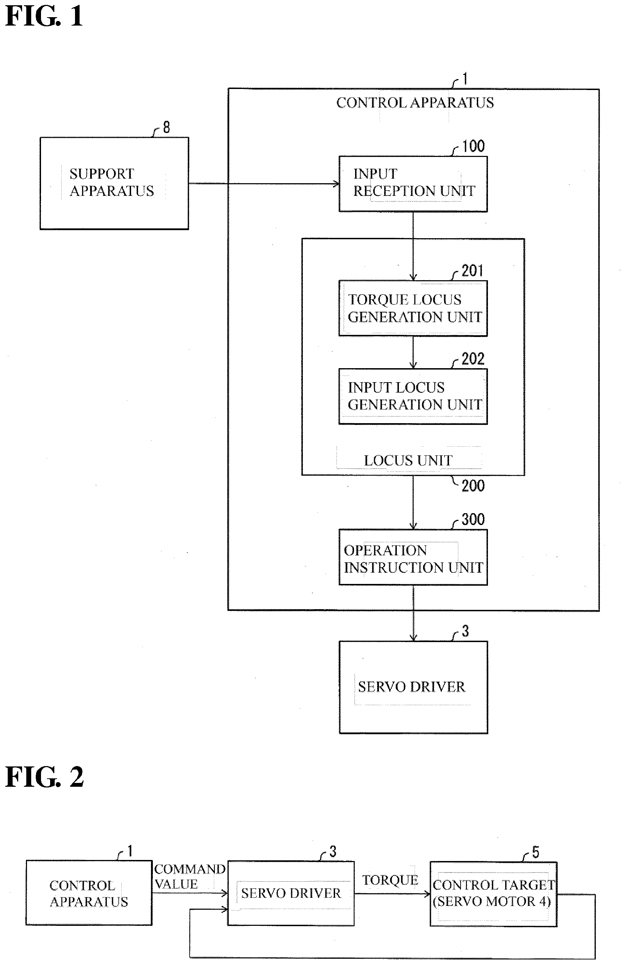

Hereinafter, an embodiment of the present invention will be described in detail. With a control system according to the present embodiment, in a control apparatus (corresponds to control apparatus 1 in FIG. 2 and the like), an input locus according to which a control target (corresponds to control target 5 in FIG. 2 and the like) is moved to a target position (predetermined position, end position) at a target time (end time) is generated and input to a servo driver (corresponds to servo driver 3 in FIG. 2 and the like), a servo motor (corresponds to servo motor 4 in FIG. 2 and the like) is driven, and the control target is moved.

Also, in the input locus generated by the control apparatus, the peak value of the torque can be suppressed. Furthermore, by suppressing the peak value of the torque, if the same driving apparatus as the driving apparatus in which the peak value in the conventional configuration is dealt with is used, the conveying weight can be made larger compared to the conventional technique. Similarly, if a driving apparatus that is the same as the conventional driving apparatus is used, it is possible to shorten the conveying time.

The input locus generated by the control apparatus may be a torque locus, a velocity locus, or a position locus. A torque locus is a locus indicating a relationship between a provided torque value and time. Also, a velocity locus is a locus indicating a relationship between the velocity of the control target and time. Also, a position locus is a locus indicating a relationship between the position of the control target and time.

Note that in the present embodiment, although description will be given taking, as an example, a servo driver as an input destination of the input locus generated by the control apparatus, the input destination of the input locus generated by the control apparatus is not limited to being a servo driver. The input destination of the input locus may be any apparatus that performs control using a locus. For example, it may be a temperature adjustment apparatus or the like.

Overview of Control System

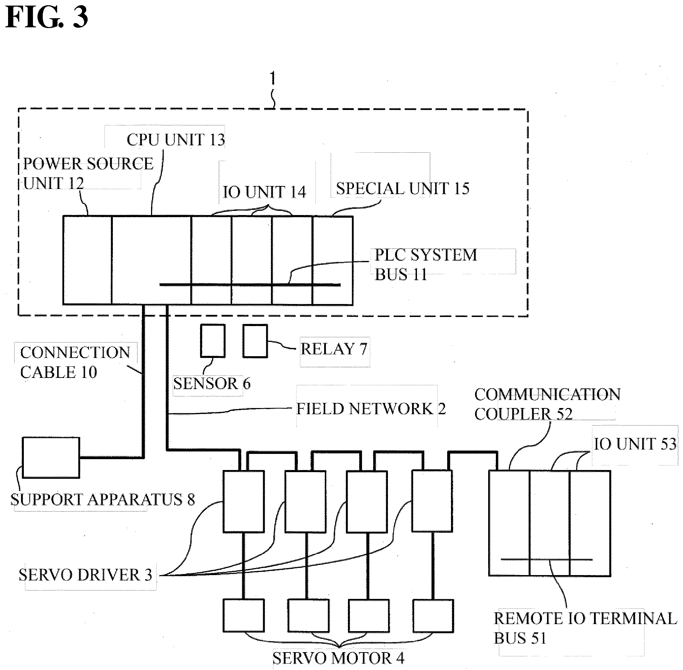

First, an overview of the control system will be described with reference to FIGS. 2 and 3. FIG. 2 is a diagram showing an overview of the control system. Also, FIG. 3 is a diagram showing details of the control system.

As shown in FIG. 2, the control system includes a control apparatus (locus generation apparatus) 1, a servo driver 3, and a control target 5 (servo motor 4). Also, a command value generated by the control apparatus 1 (torque locus, velocity locus, or position locus) is input to the servo driver 3. The servo driver 3 moves the control target 5 by driving the servo motor 4 using torque based on the received command value.

The control apparatus 1 sets the command value for controlling a control target such as a machine or equipment, and includes a CPU unit 13 (FIG. 3) as a constituent element. The CPU unit 13 includes a microprocessor, a storage means including a main memory of a microprocessor, and a communication circuit. The CPU unit 13 is configured to control the control target by repeating the transmission of the output data, the reception of the input data, and execution of the control program for generating the output data using the input data.

The storage means is used to store control programs and system programs for controlling the execution of the control programs and the input and output of input data and output data. The microprocessor executes system programs and control programs stored in the storage means.

The communication circuit transmits the output data and receives the input data. As communication circuits, the control apparatus 1 includes a first communication circuit that performs transmission of the output data and reception of the input data through a control apparatus system bus, and a second communication circuit that performs transmission of output data and reception of input data through a field network 2 (FIG. 3).

More detailed description will be given with reference to FIG. 3. As shown in FIG. 3, the control apparatus system includes a control apparatus 1, the servo driver 3 and a remote IO terminal that are connected via the control apparatus 1 and the field network 2, and a sensor 6 and a relay 7, which are field devices. Also, in the control apparatus 1, the support apparatus 8 is connected via a connection cable 10 and the like.

The control apparatus 1 includes a CPU unit 13 that executes main calculation processing, one or more IO units 14, and a special unit 15. These units are configured to be able to exchange data with each other via a PLC system bus 11. Also, a power source with a suitable voltage is supplied to the units by a power source unit 12. Note that since the units constituting the control apparatus 1 are provided by a control apparatus manufacturer, in general, the PLC system bus 11 is developed and used uniquely by the control apparatus manufacturer. In contrast to this, with the field network 2, the standard and the like are often publicly available so that products of different manufacturers can be connected.

The IO unit 14 is a unit relating to general input and output processing, and controls input and output of binarized data indicating an on state and an off state. That is, the IO unit 14 collects information about being in a state in which a sensor such as the sensor 6 has detected some target object (on) or a state in which a sensor such as the sensor 6 has not detected any target obect (off). Also, the IO unit 14 outputs one of a command (on) for activation and a command (off) for deactivation to an output destination such as a relay 7 or an actuator.

The special unit 15 has a function that is not supported by the IO unit 14, such as the input and output of analog data, temperature control, and communication by means of a specific communication scheme.

The field network 2 transmits various types of data to be exchanged with the CPU unit 13. Typically, various types of industrial Ethernet (registered trademark) can be used as the field network 2. As the industrial Ethernet, for example, EtherCAT (registered trademark), Profinet IRT, MECHATROLINK (registered trademark)-III, Powerlink, SERCOS (registered trademark)-III, CIP Motion and the like are known, and any of these may be employed. Furthermore, a field network other than industrial Ethernet may be used. For example, if motion control is not performed, DeviceNet, CompoNet/IP (registered trademark), and the like may be performed. With the control system according to the present embodiment, a configuration in the case in which EtherCAT, which is industrial Ethernet, is typically employed as the field network 2 will be described as an example.

Note that the control apparatus 1 may have a configuration in which the CPU unit 13 is provided with the function of the IO unit 14 and the function of the servo driver 3, and thereby the CPU unit 13 controls a direct control target without the intervention of the IO unit 14, the servo driver 3, or the like, in a range that can be provided by this kind of built-in function.

The servo driver 3 is connected to the CPU unit 13 via the field network 2 and the servo motor 4 is driven in accordance with the command value from the CPU unit 13. More specifically, the servo driver 3 receives command values (input loci) such as a position command value, a velocity command value, and a torque command value with a constant period from the control apparatus 1. Also, the servo driver 3 acquires an actually-measured value relating to the operation of the servo motor 4, such as the position, velocity (typically calculated based on a difference between the current position and the prior position), and torque, from a detector such as a position sensor (rotary encoder) or a torque sensor connected to the axis of the servo motor 4. Also, the servo driver 3 sets the command value from the CPU unit 13 to a target value and performs feedback control using an actually-measured value as a feedback value. In other words, the servo motor 3 adjusts the current for driving the servo motor 4 such that the actually-measured value approaches the target value. Note that the servo driver 3 is also called a servo motor amplifier in some cases.

Note that FIG. 3 shows an example of a system in which the servo motor 4 and the servo driver 3 are combined, but another configuration, such as a system in which a pulse motor and a pulse motor driver are combined, can also be employed.

A remote IO terminal is furthermore connected to the field network 2 of the control apparatus system shown in FIG. 3. The remote IO terminal typically performs processing related to general input and output processing, similarly to the IO unit 14. More specifically, the remote IO terminal includes a communication coupler 52 for performing processing relating to data transmission in the field network 2, and one or more IO unit 53. These units are configured to be able to exchange data with each other via the remote IO terminal bus 51.

Hardware configuration of support apparatus 8

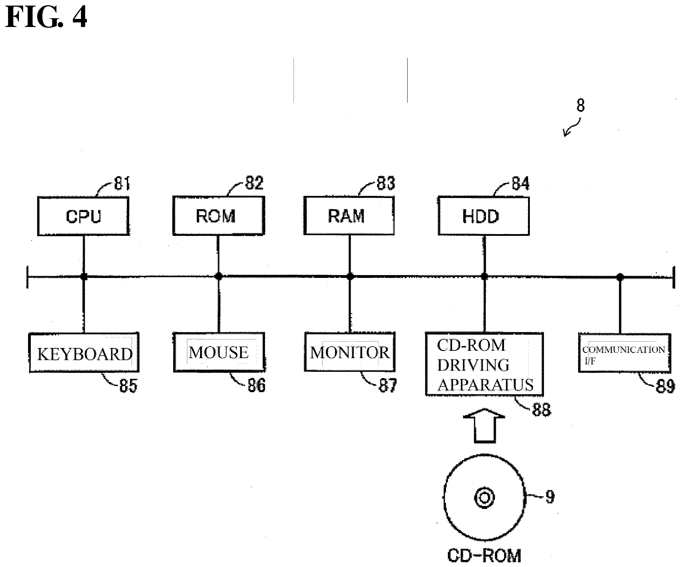

Next, a support apparatus 8 for creating a program to be executed by the control apparatus 1, performing maintenance of the control apparatus 1, and the like will be described. FIG. 4 is a schematic diagram showing a hardware configuration of a support apparatus 8. Typically, the support apparatus 8 is constituted by a general-purpose computer. Note that from the viewpoint of maintainability, the support apparatus 8 is preferably a laptop personal computer with excellent portability.

As shown in FIG. 4, the support apparatus 8 includes a CPU 81 that executes various types of programs including an OS, a ROM (Read Only Memory) 82 that stores a BIOS and various types of data, a memory RAM 83 that provides a work region for storing the data needed to execute a program on the CPU 81, and a hard disk (HDD) 84 that stores programs and the like to be executed by the CPU 81 in a non-volatile manner. The CPU 81 corresponds to a calculation unit of the support apparatus 8, and the ROM 82, the RAM 83, and the hard disk 84 correspond to the storage unit of the support apparatus 8.

The support apparatus 8 further includes a keyboard 85 and a mouse 86 that receive instructions from a user and a monitor 87 for presenting information to the user. Furthermore, the support apparatus 8 includes a communication interface (IF) 89 for communicating with a control apparatus 1 (CPU unit 13).

Various programs to be executed by the support apparatus 8 are distributed by being stored on a CD-ROM 9. The programs stored on the CD-ROM 9 are read by a CD-ROM (Compact Disk Read Only Memory) driver 88 and stored in a hard disk (HDD) 84 and the like. Alternatively, it is possible to use a configuration in which the programs are downloaded through a network from an upper-level host computer or the like.

Note that in the present embodiment, the control apparatus 1 and the support apparatus 8 are described as separate apparatuses, but they may be constituted by the control apparatus 1 as one apparatus, and in this case, the hardware configuration of the support apparatus 8 is the hardware configuration of the control apparatus 1 as-is.

Details of control apparatus 1

Next, details of the control apparatus 1 will be described with reference to FIG. 1. FIG. 1 is a block diagram showing a configuration of relevant portions of the control apparatus 1.

As shown in FIG. 1, the control apparatus 1 includes an input reception unit 100, a locus unit 200, and an operation instruction unit 300. Also, the locus unit 200 includes a torque locus generation unit 201 and an input locus generation unit 202.

The input reception unit 100 receives an instruction from a user via the support apparatus 8 and notifies the locus unit 200. The content of the received instruction is "driving time", "initial position", "initial velocity", "end position", and "end velocity", for example. Also, in the case of employing the method described in later-described Embodiment 3, "moving average time" is also received.

The locus unit 200 generates an input locus that is instructed to the servo driver 3. Specifically, the locus unit 200 generates at least one of the torque locus, the velocity locus, and the position locus as the input locus. Also, as described above, the locus unit 200 includes a torque locus generation unit 201 and a locus generation unit 204.

The torque locus generation unit 201 generates a torque locus using the "driving time", "initial position", "initial velocity", "end position", and "end velocity", of which notification was given via the input reception unit 100. Also, the input locus generation unit 202 is notified of the generated torque locus. Also, the torque locus generation unit 201 performs notification of the moment-by-moment velocity information and position information derived during generation of the torque locus to the input locus generation unit 202.

More specifically, the torque locus generation unit 201 generates a torque locus with a maximum torque value that is at its minimum by adjusting the switching timing and the maximum value of the torque under the conditions that the torque locus is a rectangular wave, the absolute values of the maximum value and minimum value of the torque are equal, and switching between the maximum value and the minimum value of the torque occurs once. Adjustment of the switching timing and the maximum value of the torque can be performed using a numerical value analysis method. The numerical value analysis method may be performed using a heuristic search algorithm (a heuristic algorithm) or using a convergent calculation such as Newton's law.

The input locus generation unit 202 generates an input locus based on the torque locus of which notification was given by the torque locus generation unit 201. If the input locus is a torque locus, the torque locus of which notification was given is used as the input locus. Also, if the velocity locus or the position locus is used as the input locus as in later-described Embodiments 2 and 3, the velocity locus or the position locus is generated based on the notified moment-by-moment velocity locus or position locus and used as the input locus.

The operation instruction unit 300 transmits a command to the servo driver 3 in accordance with the input locus generated by the locus unit 200.

Flow of processing in control apparatus 1

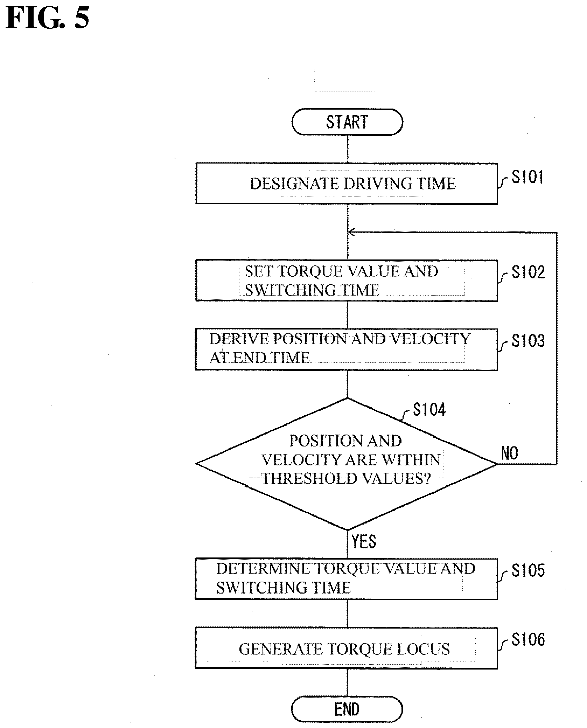

Next, a flow of processing for generating a torque locus as an input locus in the control apparatus 1 will be described with reference to FIG. 5. FIG. 5 is a flowchart diagram showing a flow of processing for generating a torque locus in the control apparatus 1.

As shown in FIG. 5, with the control apparatus 1, first, designation of the driving time is received by the input reception unit 100 (S101, input reception step). Note that as described above, with the input reception unit 100, the driving time, the initial position, the initial velocity, the end position, and the end velocity are also received.

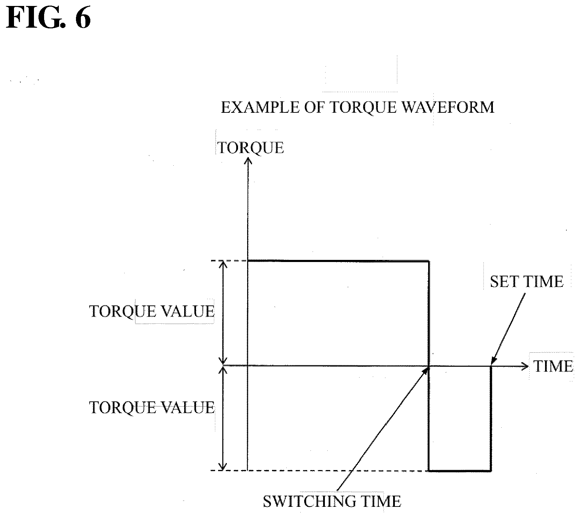

Next, the torque locus generation unit 201 sets the torque values of the torque locus and the switching time (S102). The torque values and the switching time will be described with reference to FIG. 6. FIG. 6 is a diagram showing an example of a torque locus generated by the torque locus generation unit 201. As shown in FIG. 6, the torque locus generated by the torque locus generation locus 201 is a rectangular wave and switching between the maximum value and the minimum value of the torque value occurs once. The torque values are the values of the absolute values of the maximum value and the minimum value of the torque values of the torque locus shown in FIG. 6. Also, the switching time is the time indicating the timing of switching between the maximum value and the minimum value of the torque values. In step S102, the torque values and the switching time are set.

Next, the torque locus generation unit 201 derives the position and velocity of the control target at the end time in the case of using the torque locus with the torque values and switching time set in step S102 as the input locus (S103). The end time is the time at which the designated driving time ends. Also, the torque locus generation unit 201 determines whether or not the position and velocity of the control target at the derived end time are within threshold values (S104). Specifically, it is determined whether or not the position and velocity of the control target at the end time are in a range that can be said to be equivalent to the designated end time and the end velocity.

If the derived position and velocity of the control target at the end time are not within the threshold values (NO in S104), the processing returns to step S102 and steps S102 to S104 are repeated.

On the other hand, if the derived position and velocity of the control target at the end time are within the threshold values (YES in step S104), the torque locus generation unit 201 determines the torque value at that time and the switching time to be the torque value and switching value for generating the torque locus, and generates the torque locus (S105). Also, the input locus generation unit 202 generates a torque locus that is used as an input locus using the torque locus generated by the torque locus generation unit 201 (S106, torque locus generation step).

The foregoing description was of a flow of processing for generating a torque locus in the control apparatus 1. As described above, in the present embodiment, the torque value and the switching time are derived using a heuristic search algorithm, such as repeating steps S102 to S104 until the position and velocity of the control target at the end time enter the range of being within the threshold values. Note that as described above, the derivation of the torque value and the switching time is not limited to a heuristic search algorithm, and any kind of numerical value analysis method may be used. For example, it may be performed using a convergent calculation such as Newton's law.

Embodiment 2

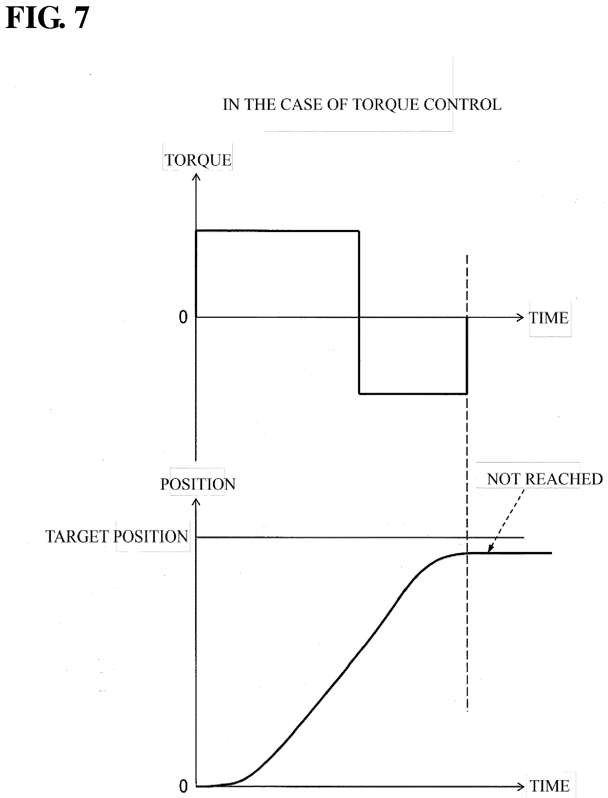

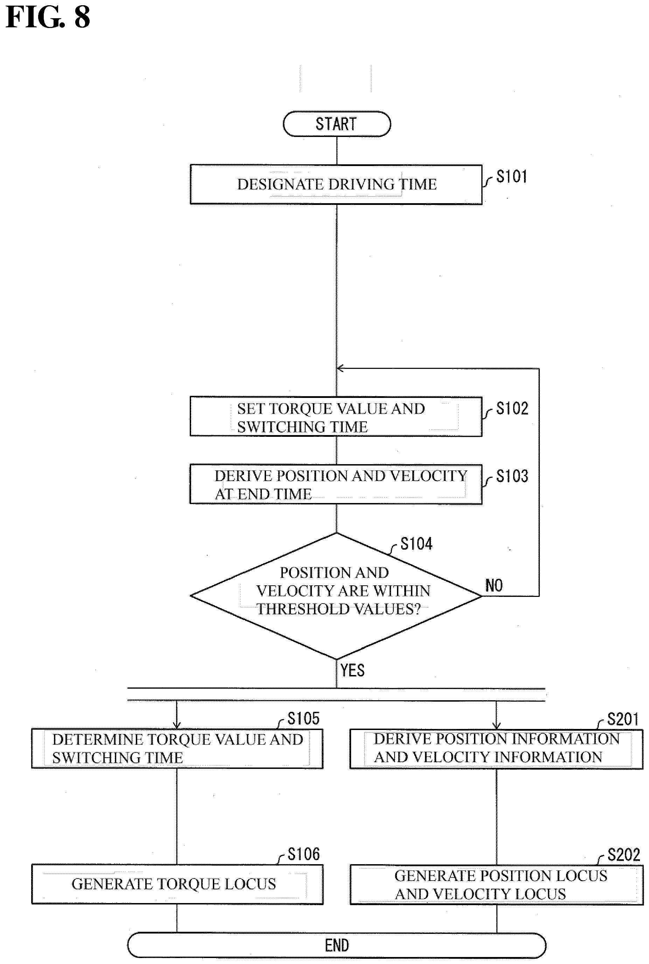

Another embodiment of the present invention is described as below with reference to FIGS. 7 and 8. Note that for the sake of convenience, members having the same function as members described in the above-described embodiment are denoted by the same reference numerals and description thereof is not included here.

Overview

In Embodiment 1, torque values and a switching time were set so as to obtain a torque locus, which was used as an input locus. However, with an actual apparatus, a model error occurs, and therefore even if control is performed using a torque according to a command, there is a possibility that the control target will not have reached the end position and the end velocity at the end time.

Specifically, description will be given with reference to FIG. 7. FIG. 7 is a diagram showing a torque locus in the case of using a torque locus as the input locus, or in other words, in the case of torque control, and the relationship between the actual position of the control target and time. As shown in FIG. 7, even if the torque locus in which the torque values and the switching are set so as to reach the input end time and end position is used as the input locus, due to model error, a case occurs in which the actual position of the control target does not reach the target position at the end time.

Here, in the present embodiment, in the configuration of Embodiment 1, at least one of the velocity locus and the position locus are derived from the velocity and position of the control target derived moment-by-moment in the process of deriving the torque locus, and these are used as the input locus.

With the velocity control or position control performed using the velocity locus or the position locus, it is possible to more accurately set the control target to the target velocity at the target position at the end time.

Flow of processing in the case of using the velocity locus and the position locus

Next, a flow of processing for generating a velocity locus and a position locus as an input locus in the control apparatus 1 will be described with reference to FIG. 8. FIG. 8 is a flowchart diagram showing a flow of processing for generating a velocity locus and a position locus according to the control apparatus 1.

As shown in FIG. 8, the processing is similar to that shown in FIG. 5 in the above-described Embodiment 1 until step S104. In the present embodiment, if the result of step S104 is YES, the processing moves to step S201 in parallel with the processing of Embodiment 1.

In step S201, the locus unit 200 derives the moment-by-moment velocity information and position information at the time of generating the torque locus. The velocity information and position information are additionally derived at the time of generating the torque locus.

Next, the input locus generation unit 202 generates the velocity locus and the position locus from the velocity information and position information derived in step S201, and uses at least one of them as the input locus (S202, input locus generation step).

The foregoing description was of a flow of processing for generating a velocity locus and a position locus in the control apparatus 1.

Embodiment 3

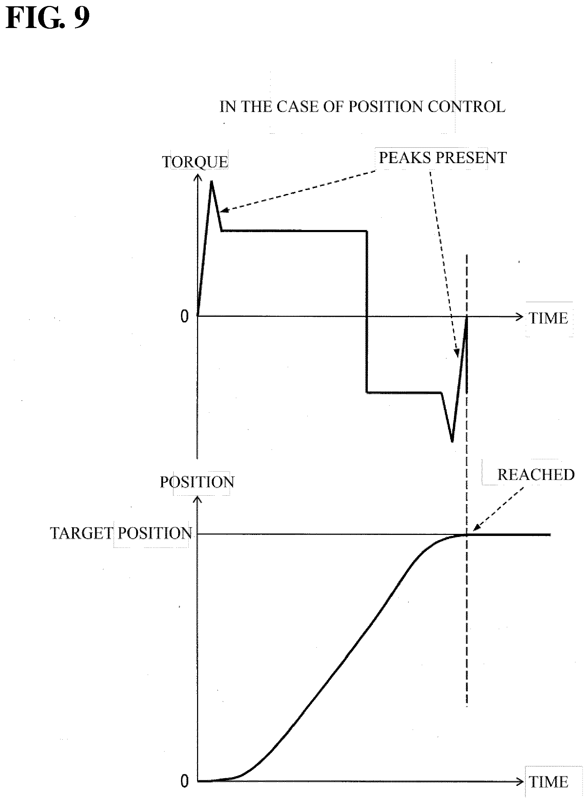

Another embodiment of the present invention is described as below with reference to FIGS. 9 to 14. Note that for the sake of convenience, members having the same function as members described in the above-described embodiment are denoted by the same reference numerals and description thereof is not included here.

Overview

With the method of using the velocity locus and the position locus described in Embodiment 2, it is possible to set the control target to the target velocity at the target position at the end time. However, due to model error, there is a possibility that the torque will peak. As the method of reducing the model error, it is conceivable to include a model as a table without being made into a mathematical expression, to create a high-dimension model with dead time such as a tracking delay added, and the like. However, these methods have adverse effects such as requiring a high degree of technology and being extremely time-consuming, and thus are not practical.

Here, in general, a second-order model indicated below is used as a characteristic model for a control target. Note that this does not mean that it is not possible to use a higher-order model, such as a third-order model or higher.

$$MX''+DX'+C=F$$

Here, M indicates the mass of the control target, D indicates the friction generated due to the velocity of the control target, and C indicates friction that is always generated.

However, the above-described model has an adverse effect such as not being able to express the friction of the low-velocity portion. Also, since the gain of the driver is set to 1, there is also an adverse effect of not being able to add the tracking delay of the driver. Accordingly, if the above-described model is used, a problem occurs in that a large torque will be generated at the time of starting driving, and a problem occurs in that a large negative torque will be generated at the time of stopping driving.

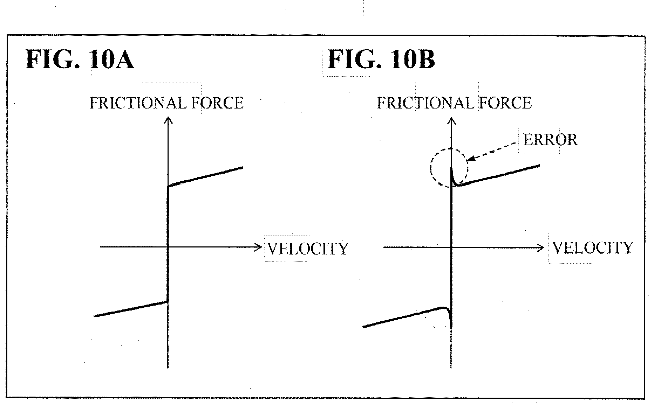

Specifically, description will be given with reference to FIGS. 9 and 10. FIG. 9 is a diagram showing a torque locus in the case of performing position control using the position locus, and a relationship between the position of the control target and the time. Also, FIGS. 10A and 10B are diagrams showing actual friction and modeled friction.

As shown in FIG. 9, by performing position control, the control target reaches a target position at the designated driving time. However, as indicated by the torque locus, torque peaks are present at the time of starting driving and at the time of ending driving.

This is because of the following reason. As shown in FIG. 10B, the friction force of the control target actually peaks near the velocity of 0 (zero). However, as shown in FIG. 10A, the modeled frictional force is a locus in which the peak near 0 (zero) is ignored. Accordingly, a difference occurs between the frictional force actually applied to the control target and the modeled frictional force, or in other words, a model error occurs. Accordingly, the the torque peaks at the time of starting driving and at the time of stopping driving.

In view of this, in the present embodiment, the input locus is generated using a moving average, and thereby the influence of the model error is reduced, and the case of the torque peaking is suppressed. Specifically, first, the velocity locus or the position locus at the time (hereinafter also referred to as "calculation driving time") obtained by subtracting the moving average time (shortened time) from the driving time is derived. Next, a locus for the moving average time is added to the derived velocity locus (calculated velocity locus) or position locus (calculated position locus) to find the moving average for the entirety of the locus (moving average calculation locus), and the input locus is set. Accordingly, the locus can be made smoother, and the torque peaks can be suppressed.

Also, since the moving average is calculated using the locus obtained by adding the moving average time, the input locus according to which the control target can be set to the designated velocity at the designated position at the designated driving time is reached.

Flow of processing in the case of using the moving average

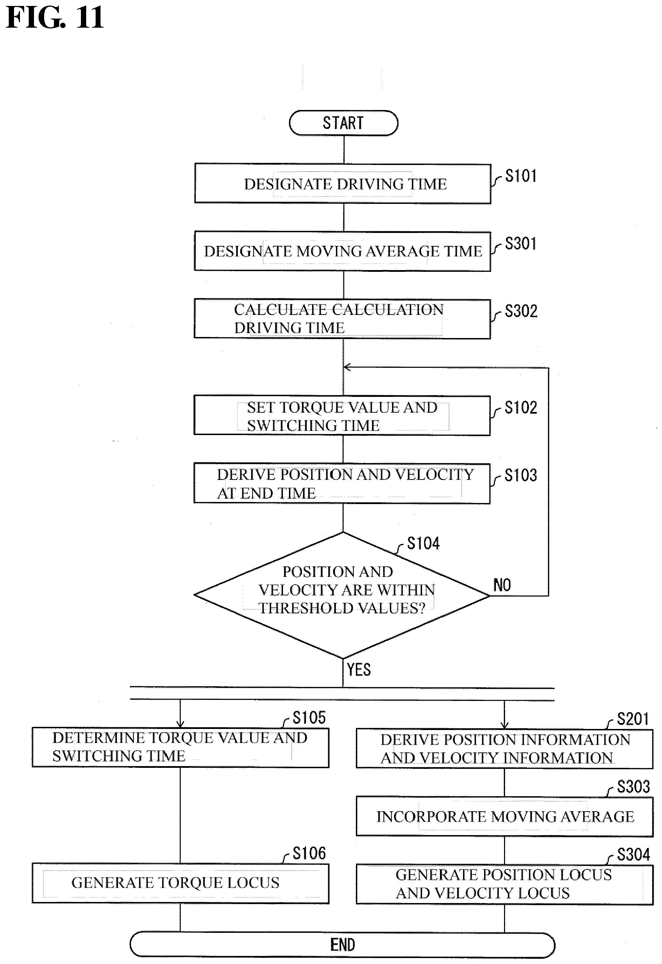

Next, the flow of processing for generating an input locus using the moving average in the control apparatus 1 will be described with reference to FIG. 11. FIG. 11 is a flowchart diagram showing a flow of processing for generating an input locus using a moving average in the control apparatus 1. Note that steps for executing processing similar to that of the steps in the flowcharts of the above-described FIGS. 5 and 8 are denoted by the same step numbers, and detailed description thereof is not described here.

As shown in FIG. 11, the designation of the driving time is first received in step S101. Next, the input reception unit 100 receives the designation of the moving average time (S301). Also, the locus unit 200 calculates the calculated driving time based on the driving time and the moving average time (S302). Then, the processing moves to step S102.

Steps S102 to S104 are similar to Embodiments 1 and 2. The input locus generation unit 202 adds a locus for the moving average time to the position locus and the velocity locus derived from the position information and the velocity information derived in step S201 (S303). Then, the moving average is obtained for the entirety of the locus resulting from the addition, and the input locus is generated (S304).

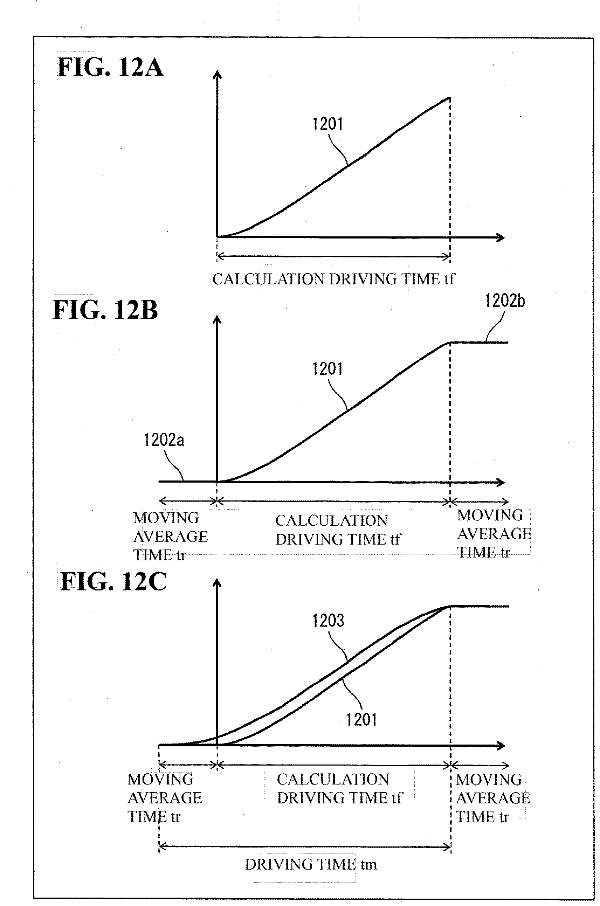

A method for deriving an input locus using a moving average will be described with reference to FIGS. 12A, 12B, and 12C using a specific example of a locus. FIGS. 12A, 12B, and 12C are diagrams for describing a method for deriving the input locus using the moving average. Note that in FIGS. 12A, 12B, and 12C, an example using a position locus is described, but the case of using a velocity locus is also similar.

First, a position locus 1201 derived based on a calculation driving time tf is shown in FIG. 12A. A locus 1202a and a locus 1202b for the moving average time tr are added to the front and rear of the position locus 1201 (FIG. 12B). Then, in the position locus 1201, a moving average for the entirety of the locus obtained by adding the locus 1202a and the locus 1202b is obtained, and the locus for the driving time tm is derived as the input locus 1203 (FIG. 12C).

Result of using the moving average

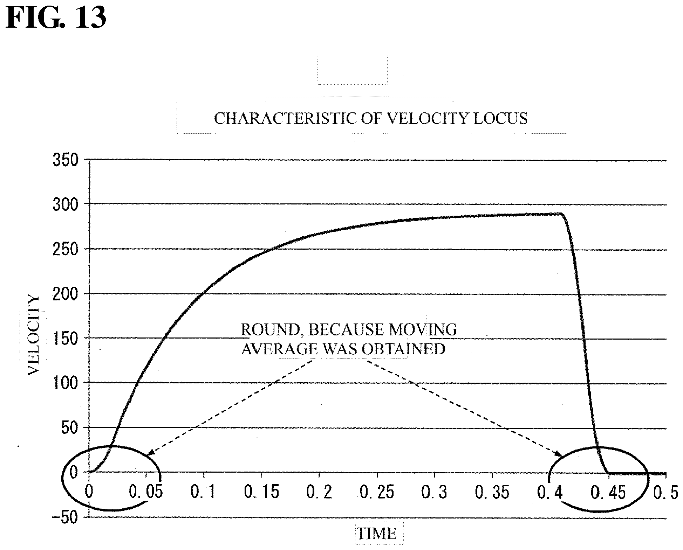

FIG. 13 shows a velocity locus derived using the moving average. FIG. 13 is a diagram showing an example of a velocity average derived using the moving average. It is understood that the locus at the driving time (when the time is near 0 s) and at the driving end time (when the time is near 0.45 s) becomes smoother due to using the moving average.

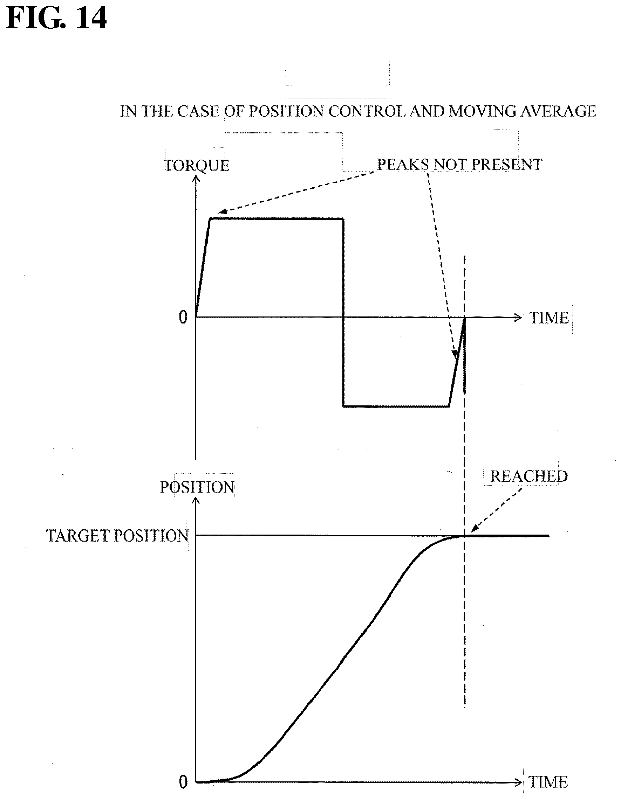

FIG. 14 shows a velocity locus derived using the moving average and a corresponding torque locus. FIG. 14 is a diagram showing a velocity locus derived using the moving average and a corresponding torque locus. As shown in FIG. 14, with the position locus derived using the moving average, the curve of the locus at the driving time and the driving end time becomes smooth. Also, as shown in corresponding torque locus, there are no peaks at the time of driving and at the driving end time.

Result of Embodiment

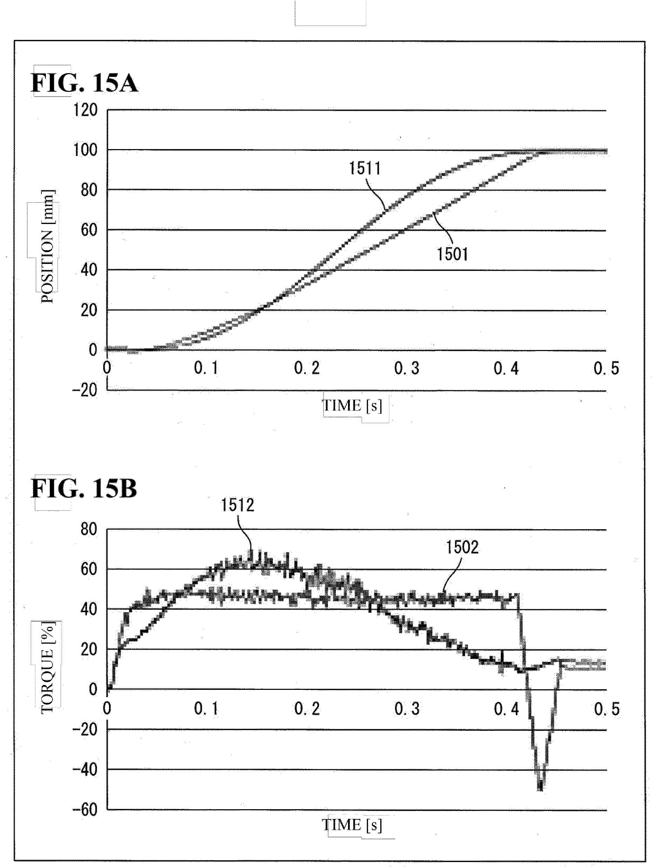

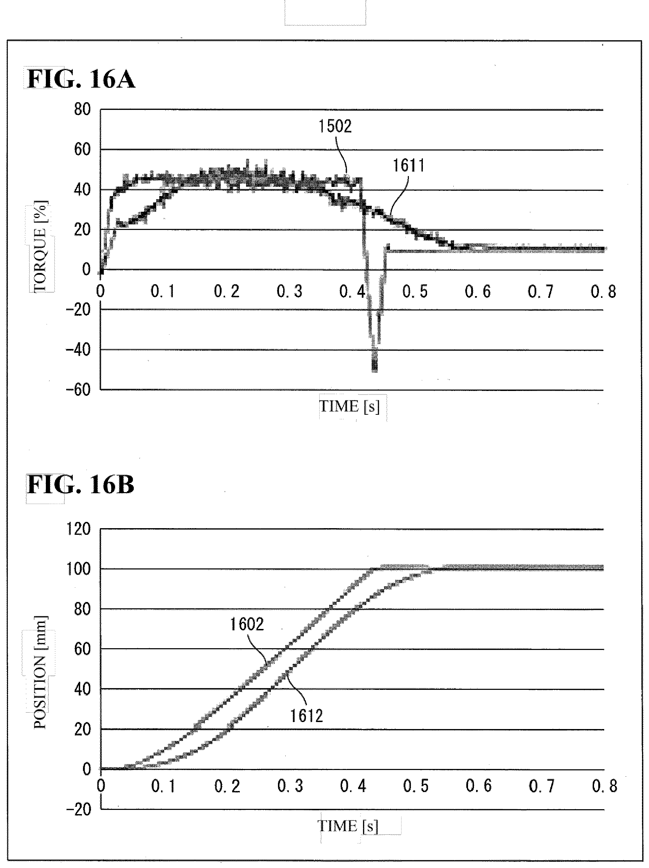

The result of the present embodiment will be described with reference to FIGS. 15 and 16. FIGS. 15 and 16 are diagrams obtained by comparing a case of using the input locus according to the present embodiment and a case of using a conventional input locus.

FIG. 15A shows a position locus 1501 indicating a relationship between the position and time when the control target is driven using the input locus of the present embodiment, and a position locus 1511 indicating a relationship between the position and time when the control target is driven using a conventional input locus. Also, FIG. 15B shows a torque locus 1502 showing a relationship between the torque and time when the control target is driven using the input locus of the present embodiment, and a position locus 1512 showing a relationship between the torque and time when the control target is driven using a conventional input locus. Note that the example shown in FIGS. 15A and 15B show a case of driving with a driving time of 0.45 s and an end position of 100 mm.

As shown in FIG. 15A, in the position locus 1501 and the position locus 1511, the initial position and the end position match. However, as shown in FIG. 15B, in the torque locus 1502 and the torque locus 1512, the maximum torque values differ by about 25%. In other words, the maximum torque value of the torque locus 1502 is about 25% smaller than the maximum torque value of the torque locus 1512. This shows a case in which the torque value can be suppressed by about 25% compared to the conventional case at the same driving time and the same driving distance by using the input locus of the present embodiment.

FIGS. 16A and 16B show examples of a case in which the maximum value of the torque locus when the control target is driven using the input locus of the present embodiment and the maximum value of the torque locus when the control target is driven using the conventional input locus are made equal. In other words, FIGS. 16A and 16B show an example of a case in which the maximum value of the torque locus 1512 is made equal to the maximum value of the torque locus 1502.

Also, FIG. 16A shows a torque locus 1502 indicating a relationship between the torque and time when the control target is driven using the input locus of the present embodiment, and a torque locus 1611 indicating a relationship between the torque and time when the control target is driven using a conventional input locus. Also, FIG. 16B shows a position locus 1602 indicating a relationship between the position and time when the control target is driven using the input locus of the present embodiment, and a position locus 1612 indicating a relationship between the position and time when the control target is driven using a conventional input locus.

If the maximum values of the torque locus 1502 and the torque locus 1611 are made equal as shown in FIG. 16A, the time at which the control target reaches the 100-mm position is 0.45 s in the position locus 1602 and is 0.6 s in the position locus 1612 as shown in FIG. 16B.

This shows a case in which if the maximum value of the torque is made equal to the conventional maximum value, or in other words, if a motor with the same capacity as the conventional motor is used, a conveying time for moving the same driving distance can be made about 25% shorter by using the input locus of the present embodiment.

Example of functional block

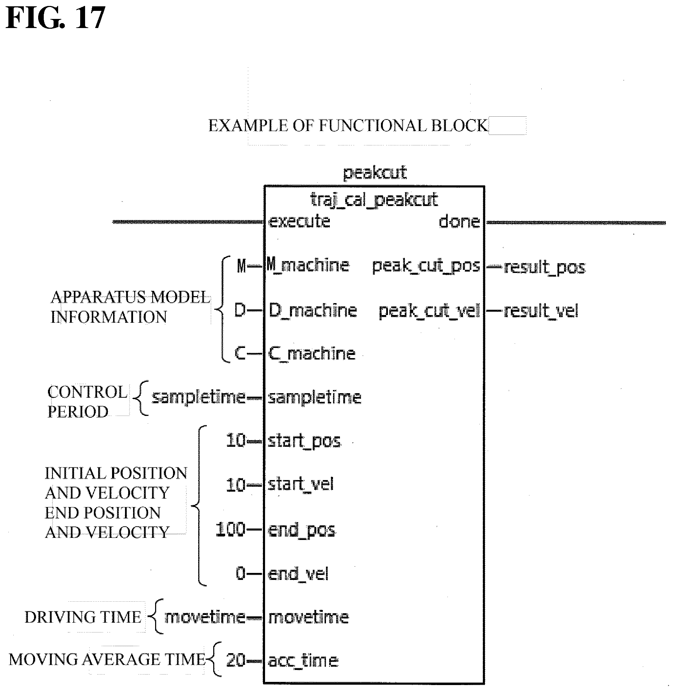

Another example in which the control apparatus 1 according to the present embodiment is indicated as a functional block will be described with reference to FIG. 17. FIG. 17 is a diagram showing an example in which the control apparatus 1 is indicated as a functional block.

In the functional block (peakcut) shown in FIG. 17, input data is shown on the left side and output data is shown on the right side. As shown in FIG. 17, in the present embodiment, apparatus model information (M_machine D_machine C_machine), a control period (sampletime), an initial position, a velocity (start_pos start vel), an end position, a velocity (end_pos end vel), a driving time (movetime), and a moving average time (acctime) are input as input data. Also, the position (peak_cut_pos), and the velocity (peak cut vel) are output as output data in response to these inputs.

Note that in the example shown in FIG. 17, the apparatus model information "M, D, C", the control period "sampletime", the initial position "10", the initial velocity "10", the end position "100", the end velocity "0", the driving time "movetime", and the moving average time "20" are input, and a position "result_pos" and a velocity "result_vel" are output.

Example realized using software

The control block of the control apparatus 1 (in particular, the locus portion 200 (torque locus generation unit 201, input locus generation unit 202), and the operation instruction unit 300) may be realized through a logical circuit (hardware) formed in an integrated circuit (IC chip) or the like, or may be realized through software using a CPU (Central Processing Unit).

In the latter case, the control apparatus 1 includes a CPU that executes commands for a program, which is software that executes functions, a ROM (Read Only Memory) or a storage apparatus (these are called "storage media") that stores the above-described program and various types of data in a manner of being readable by a computer (or a CPU), a RAM (Random Access Memory) for expanding the above-described program, and the like. Also, the computer (or CPU) reads the above-described program from the above-described storage medium and executes it, whereby the object of the present invention is achieved. As the above-described storage medium, a "non-temporary tangible medium" such as a tape, a disk, a card, a semiconductor memory, or a programmable logic circuit can be used. Also, the above-described program may be supplied to the above-described computer via any transmission medium (a communication network, a broadcasting wave, or the like) that can transmit the program. Note that the present invention can also be realized in the form of a data signal embedded in a broadcasting wave in which the above-described program is realized through electronic transmission.

The present invention is not limited to the above-described embodiments and can be modified in various ways within the scope indicated in the claims, and the technical scope of the present invention encompasses embodiments obtained by combining technical means disclosed in different embodiments.

## Claims

1. A locus generation apparatus for generating an input locus to be used in control of an apparatus, comprising:

   an input reception unit configured to receive a designated driving time, which is an amount of time until a control target moves to a predetermined position from an initial position;
   a torque locus generation unit configured to generate a torque locus corresponding to the designated driving time, the torque locus having a maximum value that is at its minimum, by adjusting a switching timing and the maximum value, under the conditions that:

   the torque locus is a rectangular wave, absolute values of the maximum value and a minimum value of torque are equal, and switching between the maximum value and the minimum value of the torque occurs once;

   and
   an input locus unit configured to generate the input locus from the torque locus.

2. The locus generation apparatus according to claim 1, wherein
   based on the torque locus, the input locus generation unit generates at least one of a velocity locus indicating a relationship between time and velocity of the control target and a position locus indicating a relationship between time and position of the control target as the input locus.

3. The locus generation apparatus according to claim 1 or 2, wherein
   the input locus generation unit uses a high-order characteristic model as a characteristic model of the control target to generate at least one of the velocity locus and the position locus as the input locus.

4. The locus generation apparatus according to any one of claims 1 - 3, wherein
   as the input locus, the input locus generation unit generates a locus resulting from performing correction using a moving average on at least one of the velocity locus and the position locus generated based on the torque locus.

5. The locus generation apparatus according to any one of claims 1 - 4, wherein
   the input locus generation unit generates the input locus by deriving at least one of a calculated velocity locus and a calculated position locus corresponding to a calculation driving time obtained by subtracting a shortened time from the designated driving time in at least one of the velocity locus and the position locus, and calculating a moving average of a locus obtained by adding a locus for the shortened time to at least one of the calculated velocity locus and the calculated position locus.

6. The locus generation apparatus according to any one of claims 1 - 5, wherein
   the input locus generation unit derives at least one of a calculated velocity locus and a calculated position locus corresponding to a calculation driving time obtained by subtracting a shortened time from the designated driving time in at least one of the velocity locus and the position locus, obtains a moving average based on a moving average calculation locus obtained by adding a locus for the shortened time to the front and rear of at least one of the calculated velocity locus and the calculated position locus, and subtracts the shortened time from the result of obtaining the moving average to obtain a locus, which is generated as the input locus.

7. The locus generation apparatus according to any one of claims 1 to 6, wherein
   the torque locus generation unit calculates the switching timing and the torque values according to which the maximum value of the torque reaches its minimum through a numerical value analysis method, and generates the torque locus.

8. A control method for a locus generation apparatus for generating an input locus to be used in control of an apparatus, comprising:

   an input reception step of receiving a designated driving time, which is an amount of time until a control target moves from an initial position to a predetermined position;
   a torque locus generation step of generating a torque locus corresponding to the designated driving time, the torque locus having a maximum value that is at its minimum, by adjusting a switching timing and the maximum value, under the conditions that:

   the torque locus is a rectangular wave, absolute values of the maximum value and a minimum value of torque are equal, and switching between the maximum value and the minimum value of the torque occurs once; and

   an input locus generation step of generating the input locus from the torque locus.

9. A control program for causing a computer to function as the locus generation apparatus according to claim 1, and for causing a computer to function as the torque locus generation unit and the input locus generation unit.

10. A computer-readable storage medium storing the control program according to claim 9.

# FIG. 1

```
                                              ┌─1
                                              CONTROL APPARATUS

  ┌─8                                              ┌─100
  SUPPORT                                      INPUT
  APPARATUS  ──────────────────────────────►  RECEPTION UNIT

                                              ┌────────────────────────┐
                                              │              ┌─201      │
                                              │  TORQUE LOCUS           │
                                              │  GENERATION UNIT        │
                                              │              ┌─202      │
                                              │  INPUT LOCUS            │
                                              │  GENERATION UNIT        │
                                              │  LOCUS UNIT             │
                                              └────────────────────────┘
                                                            └─200
                                                       ┌─300
                                              OPERATION
                                              INSTRUCTION UNIT

                                                       ┌─3
                                              SERVO DRIVER
```

# FIG. 2

```
  ┌─1              COMMAND       ┌─3            TORQUE      ┌─5
  CONTROL          VALUE         SERVO DRIVER ──────────►  CONTROL TARGET
  APPARATUS  ────────────────►                            (SERVO MOTOR 4)
```

# FIG. 3

# FIG. 4

8

| CPU 81 | ROM 82 | RAM 83 | HDD 84 |
|---|---|---|---|

| KEYBOARD 85 | MOUSE 86 | MONITOR 87 | CD-ROM DRIVING APPARATUS 88 | COMMUNICATION I/F 89 |

9

CD-ROM

# FIG. 5

```
              START

    DESIGNATE DRIVING TIME        S101

    SET TORQUE VALUE AND          S102
    SWITCHING TIME

    DERIVE POSITION AND VELOCITY  S103
    AT END TIME

              S104
         POSITION AND
      VELOCITY ARE WITHIN          NO
       THRESHOLD VALUES?

              YES

    DETERMINE TORQUE VALUE AND     S105
    SWITCHING TIME

    GENERATE TORQUE LOCUS          S106

              END
```

# FIG. 6

EXAMPLE OF TORQUE WAVEFORM

TORQUE

TORQUE VALUE

SET TIME

TORQUE VALUE

TIME

SWITCHING TIME

# FIG. 7

IN THE CASE OF TORQUE CONTROL

# FIG. 8

```
                          ( START )
                              │
                  ┌───────────────────────┐
                  │ DESIGNATE DRIVING TIME │ ⌐ S101
                  └───────────────────────┘
                              │
                              │◄──────────────────┐
                  ┌───────────────────────┐       │
                  │ SET TORQUE VALUE AND   │ ⌐ S102│
                  │ SWITCHING TIME         │       │
                  └───────────────────────┘       │
                              │                    │
                  ┌───────────────────────┐       │
                  │ DERIVE POSITION AND    │ ⌐ S103│
                  │ VELOCITY AT END TIME   │       │
                  └───────────────────────┘       │
                              │                    │
                           ╱  S104 ╲               │
                         ╱ POSITION AND ╲          │
                       ╱ VELOCITY ARE WITHIN ╲  NO │
                       ╲ THRESHOLD VALUES?   ╱─────┘
                         ╲             ╱
                           ╲  YES  ╱
                              │
            ┌─────────────────┴──────────────────┐
            │                                     │
            ▼  S105                               ▼  S201
┌───────────────────────────┐      ┌───────────────────────────┐
│ DETERMINE TORQUE VALUE AND │      │ DERIVE POSITION INFORMATION│
│ SWITCHING TIME             │      │ AND VELOCITY INFORMATION   │
└───────────────────────────┘      └───────────────────────────┘
            │                                     │
            ▼  S106                               ▼  S202
┌───────────────────────────┐      ┌───────────────────────────┐
│ GENERATE TORQUE LOCUS      │      │ GENERATE POSITION LOCUS    │
│                            │      │ AND VELOCITY LOCUS         │
└───────────────────────────┘      └───────────────────────────┘
            │                                     │
            └─────────────────┬──────────────────┘
                          (   END   )
```

# FIG. 9

IN THE CASE OF POSITION CONTROL

TORQUE

PEAKS PRESENT

0 → TIME

POSITION

REACHED

TARGET POSITION

0 → TIME

# FIG. 10A

FRICTIONAL FORCE

VELOCITY

# FIG. 10B

FRICTIONAL FORCE

ERROR

VELOCITY

# FIG. 11

```
                    ( START )
                        │
        ┌───────────────────────────────┐ ┌S101
        │   DESIGNATE DRIVING TIME      │
        └───────────────────────────────┘
                        │
        ┌───────────────────────────────┐ ┌S301
        │ DESIGNATE MOVING AVERAGE TIME │
        └───────────────────────────────┘
                        │
        ┌───────────────────────────────┐ ┌S302
        │    CALCULATE CALCULATION      │
        │        DRIVING TIME           │
        └───────────────────────────────┘
                        │
        ┌───────────────────────────────┐ ┌S102
        │    SET TORQUE VALUE AND       │
        │        SWITCHING TIME         │
        └───────────────────────────────┘
                        │
        ┌───────────────────────────────┐ ┌S103
        │  DERIVE POSITION AND VELOCITY │
        │          AT END TIME          │
        └───────────────────────────────┘
                        │
                    ◇ S104
              POSITION AND
           VELOCITY ARE WITHIN      NO
           THRESHOLD VALUES?
                   │ YES
        ┌──────────┴──────────────┐
        │                         │
   ┌S105                      ┌S201
┌──────────────────────┐  ┌──────────────────────────┐
│ DETERMINE TORQUE     │  │ DERIVE POSITION INFORMATION│
│ VALUE AND            │  │ AND VELOCITY INFORMATION   │
│ SWITCHING TIME       │  └──────────────────────────┘
└──────────────────────┘              │
        │                         ┌S303
        │              ┌──────────────────────────┐
        │              │ INCORPORATE MOVING AVERAGE│
        │              └──────────────────────────┘
   ┌S106                      ┌S304
┌──────────────────────┐  ┌──────────────────────────┐
│ GENERATE TORQUE      │  │ GENERATE POSITION LOCUS  │
│ LOCUS                │  │ AND VELOCITY LOCUS       │
└──────────────────────┘  └──────────────────────────┘
        │                         │
        └────────────┬────────────┘
                ( END )
```

**FIG. 12A**

CALCULATION DRIVING TIME tf

**FIG. 12B**

MOVING AVERAGE TIME tr

CALCULATION DRIVING TIME tf

MOVING AVERAGE TIME tr

**FIG. 12C**

MOVING AVERAGE TIME tr

CALCULATION DRIVING TIME tf

MOVING AVERAGE TIME tr

DRIVING TIME tm

23

# FIG. 13

CHARACTERISTIC OF VELOCITY LOCUS

ROUND, BECAUSE MOVING
AVERAGE WAS OBTAINED

VELOCITY

TIME

# FIG. 14

IN THE CASE OF POSITION CONTROL AND MOVING AVERAGE

## FIG. 15A

## FIG. 15B

## FIG. 16A

## FIG. 16B

# FIG. 17

EXAMPLE OF FUNCTIONAL BLOCK

peakcut

| | | |
|---|---|---|
| | traj_cal_peakcut | |
| execute | | done |
| M — M_machine | | peak_cut_pos — result_pos |
| D — D_machine | | peak_cut_vel — result_vel |
| C — C_machine | | |
| sampletime — sampletime | | |
| 10 — start_pos | | |
| 10 — start_vel | | |
| 100 — end_pos | | |
| 0 — end_vel | | |
| movetime — movetime | | |
| 20 — acc_time | | |

APPARATUS MODEL INFORMATION { M, D, C

CONTROL PERIOD { sampletime

INITIAL POSITION AND VELOCITY END POSITION AND VELOCITY { 10, 10, 100, 0

DRIVING TIME { movetime

MOVING AVERAGE TIME { 20

Europäisches
Patentamt

European
Patent Office

Office européen
des brevets

# EUROPEAN SEARCH REPORT

Application Number

EP 17 19 0189

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kim Doang Nguyen ET AL: "On Algorithms for Planning S-Curve Motion Profiles", International Journal of Advanced Robotic Systems, 1 March 2008 (2008-03-01), pages 11-8806, XP055364644, DOI: 10.5772/5652 Retrieved from the Internet: URL:http://cdn.intechopen.com/pdfs/4267.pdf [retrieved on 2017-04-13] * paragraph [2(i)]; figure 1a * | 1-10 | INV. G05B19/416 |
| X | EP 2 752 718 A1 (ISUZU MOTORS LTD [JP]) 9 July 2014 (2014-07-09) * paragraph [0038]; figure 11 * | 1-10 | |
| X | US 2013/035773 A1 (WANG YEBIN [US] ET AL) 7 February 2013 (2013-02-07) * paragraph [0015]; figures 1A-1C * | 1-10 | |
| A | US 5 159 250 A (JEON BYEONG-HWAN [KR] ET AL) 27 October 1992 (1992-10-27) * the whole document * | 1-10 | TECHNICAL FIELDS SEARCHED (IPC) G05B |

The present search report has been drawn up for all claims

| Place of search | Date of completion of the search | Examiner |
|---|---|---|
| The Hague | 20 March 2018 | Groen, Fokke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 0189

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2018

| Patent document cited in search report | | Publication date | Patent family member(s) | | Publication date |
|---|---|---|---|---|---|
| EP 2752718 | A1 | 09-07-2014 | CN | 103649853 A | 19-03-2014 |
| | | | EP | 2752718 A1 | 09-07-2014 |
| | | | JP | 5834628 B2 | 24-12-2015 |
| | | | JP | 2013047891 A | 07-03-2013 |
| | | | US | 2014229013 A1 | 14-08-2014 |
| | | | WO | 2013031521 A1 | 07-03-2013 |
| US 2013035773 | A1 | 07-02-2013 | CN | 103747925 A | 23-04-2014 |
| | | | DE | 112012003253 T5 | 30-04-2014 |
| | | | JP | 5638724 B2 | 10-12-2014 |
| | | | JP | 2014517673 A | 17-07-2014 |
| | | | US | 2013035773 A1 | 07-02-2013 |
| | | | WO | 2013021713 A2 | 14-02-2013 |
| US 5159250 | A | 27-10-1992 | JP | H0557644 A | 09-03-1993 |
| | | | JP | H0818264 B2 | 28-02-1996 |
| | | | US | 5159250 A | 27-10-1992 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016195891 A
- JP 2016058561 A
- JP 2009081922 A